Europäisches Patentamt

European Patent Office

Office européen des brevets

(11) Veröffentlichungsnummer: **0 489 305 A2**

(12) **EUROPÄISCHE PATENTANMELDUNG**

(21) Anmeldenummer: **91119806.7**

(22) Anmeldetag: **21.11.91**

(51) Int. Cl.5: **C08K 5/01**, C08L 25/04,
C08J 9/16, C08F 212/08,
//(C08L25/04,25:04),
(C08F212/08,212:34)

(30) Priorität: **29.11.90 DE 4038042**

(43) Veröffentlichungstag der Anmeldung:
**10.06.92 Patentblatt 92/24**

(84) Benannte Vertragsstaaten:
**AT BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Hintz, Hans, Dr.**
**Wolframstrasse 4**
**W-6700 Ludwigshafen(DE)**
Erfinder: **Hahn, Klaus, Dr.**
**Im Buegen 9**
**W-6719 Kirchheim(DE)**
Erfinder: **Guhr, Uwe, Dr.**
**Beim Hochgericht 9**
**W-6718 Gruenstadt(DE)**
Erfinder: **Riethues, Michael, Dr.**
**Pielachtalstrasse 20**
**W-6700 Ludwigshafen(DE)**

(54) **Ölbeständige expandierbare Styrolpolymerisate.**

(57) Ölbeständige expandierbare Styrolpolymerisate, enthaltend
a) 10 bis 90 Gew.-% unvernetztes Polystyrol und/oder eines unvernetzten Styrolcopolymerisates mit mindestens 50 Gew.-% einpolymerisiertem Styrol,
b) 10 bis 90 Gew.-% eines vernetzten Styrolpolymerisates, das mindestens 0,1 Gew.-%, jedoch weniger als 2 Gew.-%, eines Monomeren mit mindestens zwei olefinischen Doppelbindungen einpolymerisiert enthält,
c) 1 bis 10 Gew.-%, bezogen auf die Summe von a) und b) eines $C_3$- bis $C_6$-Kohlenwasserstoffs als Treibmittel und gegebenenfalls
d) übliche Zusatzstoffe in wirksamen Mengen,
wobei die Mischung aus a) und b) einen Schmelzindes MFI (200 °C, 5,0 kp) nach DIN 53 735 zwischen 1 und 20 [g/10 min.] aufweist.

Die Erfindung betrifft neuartige expandierbare Styrolpolymerisate für die Herstellung von ölbeständigen Schaumstoffen.

Schaumstoffe auf Basis von Styrolpolymerisaten haben als Wärmedämm- und Verpackungsmaterial große technische Bedeutung erlangt. Aufgrund ihrer Unbeständigkeit gegenüber Ölen sind sie jedoch im Kraftfahrzeugsektor und maritimen Sektor nur bedingt einsetzbar.

Der Erfindung lag die Aufgabe Zugrunde, ölbeständige Polystyrolschaumstoffe zu entwickeln. Überraschenderweise wurde nun gefunden, daß Mischungen aus unvernetztem Polystyrol und vernetztem Polystyrol zu ölbeständigen Schaumstoffen führen, obwohl der unvernetzte Hauptbestandteil nicht ölbeständig ist.

Gegenstand der Erfindung sind somit ölbeständige expandierbare Styrolpolymerisate, enthaltend

a) 10 bis 90 Gew.-% unvernetztes Polystyrol und/oder eines unvernetzten Styrolcopolymerisates mit mindestens 50 Gew.-% einpolymerisiertem Styrol,

b) 10 bis 90 Gew.-% eines vernetzten Styrolpolymerisates, das mindestens 0,1 Gew.-%, jedoch weniger als 2 Gew.-%, eines Monomeren mit mindestens zwei olefinischen Doppelbindungen einpolymerisiert enthält,

c) 1 bis 10 Gew.-%, bezogen auf die Summe von a) und b) eines $C_3$- bis $C_6$-Kohlenwasserstoffs als Treibmittel und gegebenenfalls

d) übliche Zusatzstoffe in wirksamen Mengen,

wobei die Mischung aus a) und b) einen Schmelzindex MFI (200°C, 5,0 kp) nach DIN 53 735 zwischen 1 und 20 [g/10 min.] aufweist.

Gegenstand der Erfindung ist ferner ein Verfahren zur Herstellung ölbeständiger expandierbarer Styrolpolymerisate, das dadurch gekennzeichnet ist, daß man Styrol, gegebenenfalls unter Mitverwendung von bis zu 50 Gew.-%, bezogen auf das Monomerengemisch, eines weiteren Monomeren mit einer olefinischen Doppelbindung, in wäßriger Suspension in Gegenwart von 0,08 bis 0,5 Gew.-% eines Vernetzungen bewirkenden Monomeren mit mindestens zwei olefinischen Doppelbindungen und in Gegenwart von 0,01 bis 3 Gew.-% eines üblichen Reglers mit einer Kettenübertragskonstante K Zwischen 0,1 und 50 polymerisiert und vor, während oder nach der Polymerisation das Treibmittel und gegebenenfalls übliche Zusatzstoffe zufügt.

Gegenstand der Erfindung sind weiterhin ölbeständige Schaumstoffe der Dichte 0,005 bis 0,1 g/cm³, enthaltend

a) 10 bis 90 Gew.-% unvernetztes Polystyrol und/oder eines unvernetzten Styrolcopolymerisats mit mindestens 50 Gew.-% einpolymerisiertem Styrol,

b) 10 bis 90 Gew.-% eines vernetzten Styrolpolymerisats, das mindestens 0,1, jedoch weniger als 2 Gew.-% eines Monomeren mit mindestens zwei olefinischen Doppelbindungen einpolymerisiert enthält, und gegebenenfalls

c) übliche Zusatzstoffe in wirksamen Mengen,

wobei die Mischung aus a) und b) einen Schmelzindex MFI (200°C, 5,0 kp) nach DIN 53 735 zwischen 1 und 20 [g/10 min] aufweist.

Überraschenderweise weisen die aus den neuen expandierbaren Styrolpolymerisaten hergestellten Schaumstoffe eine hohe Dimensionsstabilität auch bei höheren Temperaturen auf.

In der älteren DE-A 39 36 596 werden expandierbare Styrolpolymerisate auf Basis einer Mischung aus unvernetztem Polystyrol und einem vernetzten Styrol-Dien-Copolymeren mit einem Dien-Gehalt von 2 bis 45 Gew.-% beschrieben.

In der EP-B 106 129 wird empfohlen, die Expandierbarkeit von treibmittelhaltigen Styrolpolymerisaten dadurch zu erhöhen, daß man die Styrolpolymerisation in Gegenwart von 0,01 bis 1 Gew.-% eines Mercaptans durchführt. Führt man dieses Verfahren in Gegenwart von Verbindungen mit zwei polymerisierbaren Doppelbindungen durch, so zeigt sich beispielsweise bereits die bei einem Zusatz von 0,01 Gew.-% Divinylbenzol eine verminderte Expandierbarkeit.

Als Hauptkomponente a) enthalten die neuen Produkte 10 bis 90 Gew.-%, vorzugsweise 20 bis 80 Gew.-%, insbesondere 30 bis 70 Gew.-% Polystyrol und/oder ein Styrolcopolymerisat mit mindestens 50 Gew.-%, vorzugsweise mindestens 80 Gew.-% einpolymerisiertem Polystyrol. Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure(anhydrid). Die Komponente a) ist unvernetzt, d.h. in siedendem Toluol löslich.

Im allgemeinen besitzt die Komponente a) eine Viskositätszahl nach DIN 53 726, gemessen in Toluol (0,005 g/ml, 25°C), zwischen 50 und 200, vorzugsweise zwischen 70 und 180, insbesondere zwischen 100 und 170 [ml/g].

Als erfindungswesentliche Komponente b) enthalten die neuen Produkte 10 bis 90 Gew.-%, vorzugsweise 20 bis 80 Gew.-%, insbesondere 30 bis 70 Gew.-% eines vernetzten Styrolpolymerisats, das mindestens 0,1, jedoch weniger als 2 Gew.-%, vorzugsweise 0, 1 bis 0,5 Gew.-%, eines Monomeren mit mindestens zwei olefinischen Doppelbindungen einpolymerisiert enthält. Als Comonomere geeignet sind beispielsweise Butadien, Isopren, Divinylbenzol, Butandioldiacrylat, Hexandioldiacrylat u.ä. Die Komponente b) liegt, vermutlich im wesentlichen als Netzwerk, gleichmäßig in der Polystyrolmatrix der Komponente a) verteilt vor. Eine derartige Verteilung kann beispielsweise dadurch erhalten werden, daß man von einem unvernetzten Styrol-Dien-Copolymeren ausgeht, dieses in Styrol löst und polymerisiert, wobei unter Pfropfung das Copolymere vernetzt. Vorteilhaft erzielt man diese Verteilung dadurch, daß man Styrol in Gegenwart eines vernetzend wirkenden Monomeren und eines Reglers polymerisiert, wobei deren Mengen so bemessen werden, daß nur ein Teil des Polymerisates vernetzt wird. Die Komponente b) ist vernetzt, d.h. unlöslich in siedendem Toluol. Der Anteil an der vernetzten Komponente b) in der Mischung aus a) und b) läßt sich leicht durch Extraktion mit siedendem Toluol und Bestimmung des Toluol-unlöslichen Rückstands messen.

Die Mischung aus a) und b) soll einen Schmelzindex MFI 200/5,0 nach DIN 53 735 zwischen 1 und 20, vorzugsweise zwischen 2 und 15, insbesondere zwischen 3 und 10, aufweisen. Ist der Schmelzindex zu niedrig, so ist die Expandierbarkeit unbefriedigend; ist der Schmelzindex zu hoch, so ist die Ölbeständigkeit unbefriedigend.

Als Treibmittel c) enthalten die expandierbaren Styrolpolymerisate 1 bis 10 Gew.-%, bezogen auf die Summe von a) und b), vorzugsweise 3 bis 8 Gew.-% und insbesondere 5 bis 8 Gew.-% eines $C_3$- bis $C_6$-Kohlenwasserstoffs, wie Propan, Butan, Isobutan, n-Pentan, Isopentan, Neopentan und/oder Hexan. Vorzugsweise wird ein handelsübliches Pentan-Gemisch verwendet.

Die expandierbaren Styrolpolymerisate können ferner d) übliche Zusatzstoffe in wirksamen Mengen enthalten, wie Farbstoffe, Füllstoffe, Stabilisatoren, Flammschutzmittel, Synergisten, Keimbildner, Gleitmittel, Antistatika, beim Verschäumen antiverklebend wirkende Stoffe und Mittel zur Verkürzung der Entformzeit beim Ausschäumen.

Als Zusatzstoffe sind auch Poly-(2,6-dimethyl)-1,4-phenylenether und Poly-1,4-phenylensulfid geeignet. In Mengen von 1 bis 20 Gew.-%, bezogen auf die Komponente a), bewirken diese Zusätze eine Erhöhung der Wärmeformbeständigkeit des Schaumstoffs.

Als Zusatzstoffe geeignet sind auch feinteilige organische Polymere mit einem hohen Wasseraufnahmevermögen geeignet (vgl. DE-A 40 14 261). Diese Zusätze bewirken eine Erhöhung der Rieselfähigkeit.

Die expandierbaren Styrolpolymerisate liegen im allgemeinen in Form von Partikeln, d.h. in Perlform, Granulatform oder in Form von Brocken vor und haben vorteilhaft einen mittleren Durchmesser von 0,1 bis 6 mm, insbesondere 0,4 bis 3 mm.

Die Herstellung kann beispielsweise durch Vermischen der Komponenten in der Schmelze in einem Extruder erfolgen, wobei der Strang nach dem Auspressen so rasch abgekühlt wird, daß kein Aufschäumen erfolgt, und anschließend zerkleinert wird.

Nach einem bevorzugten Verfahren werden die erfindungsgemäßen expandierbaren Styrolpolymerisate hergestellt durch Polymerisation von Styrol, gegebenenfalls unter Mitverwendung von Comonomeren, in wäßriger Suspension, wobei vor, während oder nach der Polymerisation die oben beschriebenen Treibmittel und gegebenenfalls die Zusatzstoffe zugesetzt werden. Erfindungswesentlich ist es, bei der Polymerisation sowohl einen Regler als auch ein Vernetzungen bewirkendes Monomeres mit mindestens zwei olefinischen Doppelbindungen mitzuverwenden.

Man arbeitet üblicherweise unter Verwendung von 0,01 bis 3 Gew.-%, vorzugsweise 0,02 bis 2 Gew.-%, insbesondere 0,1 bis 1 Gew.-%, eines Reglers mit einer Kettenübertragungskonstante K zwischen 0,1 und 50, vorzugsweise zwischen 1 und 30, wie es in der EP-B 106 129 und DE-A 39 21 148 beschrieben ist. Geeignete Regler sind beispielsweise Thiole, wie n-Dodecylmercaptan (K = 19), tert.-Dodecylmercaptan (K = 3), n-Butylmercaptans (K = 22) und tert.-Butylmercaptan (K = 3,6), ferner Pentaphenylethan (K = 2,0) und dimeres $\alpha$-Methylstyrol (K = 0,5).,

Geeignete Vernetzer sind beispielsweise Butadien, Isopren, Divinylbenzol, Butandioldiacrylat, Butandioldimethacrylat, Hexandioldiacrylat u.ä. Vorzugsweise wird Divinylbenzol verwendet. Der Vernetzer wird im allgemeinen in einer Menge von 0,08 bis 0,5 Gew.-%, vorzugsweise 0,1 bis 0,3 Gew.-% verwendet. Die erforderliche Menge an Vernetzer läßt sich je nach dem gewünschten Anteil an der vernetzten Komponente b) leicht durch Vorversuche ermitteln. Der Vernetzer liegt bei beendeter Polymerisation weitgehend in der vernetzten Komponente b) einpolymerisiert vor. Nur unwesentliche Mengen sind in der unvernetzten Komponente a) einpolymerisiert.

Regler und Vernetzer werden entweder vor Polymerisationsbeginn vorgelegt oder aber erst während der Polymerisation, beispielsweise bei einem Umsatz von 20 bis 80 % dem Ansatz zugefügt. Vorteilhaft wird der Vernetzer vorgelegt und der Regler erst während der Polymerisation zugefügt.

Als Polymerisationskatalysatoren verwendet man die bei der radikalischen Styrolpolymerisation üblichen Initiatoren, insbesondere organische Peroxiverbindungen, wie Perester, Percarbonate, Peroxide, Peroxicarbonate, Perketale u.a. Bewährt hat sich eine Kombination von Peroxiverbindungen, die bei niedriger Temperatur zerfallen, wie Dibenzoylperoxid oder t-Butylperoxi-2-ethylhexylhexanoat, mit solchen, die bei höherer Temperatur zerfallen, wie tert.-Butylperbenzoat und Dicumylperoxid.

Durch gleichzeitige Verwendung von Regler und Verzweiger erhält man ein Gemisch aus unvernetztem und vernetztem Styrolpolymerisat, das sich durch eine besonders hohe Ölbeständigkeit auszeichnet und gut expandierbar ist.

Der Gehalt an Styrol in den expandierbaren Styrolpolymerisaten sollte im allgemeinen niedrig sein und üblicherweise weniger als 0,2 Gew.-%, vorzugsweise weniger als 0,1 Gew.-%, insbesondere weniger als 0,08 Gew.-% betragen. Zur Erreichung dieses Ziels ist es zweckmäßig, bei Verwendung von Mercaptanen als Regler, diese erst während der Polymerisation bei einem Umsatz zwischen 20 und 90 % zuzufügen.

Die erfindungsgemäßen treibmittelhaltigen Polystyrol-Teilchen sind perlförmig und haben im allgemeinen einen Durchmesser zwischen 0,2 und 4 mm. Sie können nach üblichen Methoden, z.B. mit Wasserdampf, zu Schaumstoffteilchen mit einem Durchmesser zwischen 0,5 und 2 cm und einer Dichte zwischen 0,005 und 0,05 g/cm$^3$ vorgeschäumt werden.

Die vorgeschäumten Teilchen können dann nach üblichen Verfahren durch Erhitzen in nicht gasdicht schließenden Formen zu Schaumstoff-Formteilen mit einem Raumgewicht von 0,005 bis 0,1 g/cm$^3$ ausgeschäumt werden.

Die in den Beispielen genannten Teile sind Gewichtsteile.

Beispiel 1

In einem druckfesten Rührkessel wurde eine Mischung aus 100 Teilen Wasser, 0,1 Teilen Natriumpyrophoshat, 0,1 Teilen Magnesiumphosphat, 0,1 Teilen Divinylbenzol, 0,1 Teilen tert.-Dodecylmerkaptan, 100 Teilen Styrol, 7 Teilen Pentan, 0,25 Teilen tert.-Butylperbenzoat, 0,15 Teilen Dibenzoylperoxid und 4 Teilen einer 10 %igen wäßrigen Lösung von Polyvinylpyrrolidon innerhalb von 2 Stunden unter Rühren auf 90°C erhitzt, anschließend in 4 Stunden von 90°C auf 120°C erhöht und anschließend 6 Stunden auf 120°C gehalten. Nach dem Abkühlen wurde das erhaltene Perlpolymerisaat mit einem mittleren Teilchendurchmesser von ca. 1 mm von der wäßrigen Phase abgetrennt, gewaschen und getrocknet.

Das erhaltene expandierbare Styrolpolymerisat wurde in einem handelsüblichen Rührvorschäumer, Typ Rauscher, mit strömendem Wasserdampf auf ein Schüttgewicht von 20 g/l vorgeschäumt. Nach 24 Stunden Zwischenlagerung wurden die Schaumstoffpartikel in einer Blockform, Typ Rauscher, durch Bedampfung mit Wasserdampf und einem Druck von 1,8 bar zu einem Block verschweißt.

Die Bestimmung des Gehalts an vernetzter Komponente b) wird durch Behandlung mit siedendem Toluol (72 h) und Abtrennen durch Zentrifugieren bestimmt.

Die Schmelzviskosität einer entgasten Probe (3 h bei 150°C) wird nach DIN 53 735 mit den Bedingungen 200°C und 5 kg Gewicht bestimmt.

Zur Prüfung der Ölbeständigkeit wurden in Anlehnung an die DIN 53 428 jeweils 5 Proben des Schaumstoffs in Würfelform mit 5 cm Kantenlänge 72 Stunden lang in Heizöl und Dieselkraftstoff gelagert. Die Bewertungskriterien sind: 0 = nicht verändert (beständig); 1 = verändert (bedingt beständig); 2 = sehr stark verändert (unbeständig).

Die Ergebnisse sind in der Tabelle zusammengefaßt.

Beispiel 2

Es wurde wie in Beispiel 1 gearbeitet, jedoch 0,6 Teile tert.-Dodecylmerkaptan und 0,1 Teile Divinylbenzol verwendet.

Beispiel 3

Es wurde wie in Beispiel 1 gearbeitet, jedoch wurden zusätzlich 1 Teil Hexabromcyclododecan und 0,2 Teile Dicumylperoxid verwendet.

Beispiel 4

Es wurde wie in Beispiel 1 gearbeitet, jedoch wurden nur 4,5 Teile Pentan als Treibmittel und 0,6 Teile tert.-Dodecylmerkaptan verwendet.

Beispiel 5

Es wurde wie in Beispiel 1 gearbeitet, jedoch wurden 0,15 Teile Divinylbenzol und 0,02 Teile tert.-Dodecylmerkaptan verwendet.

Beispiel 6 (Vergleich)

Es wurde wie in Beispiel 1 gearbeitet, jedoch ohne Mitverwendung von Divinylbenzol und tert.-Dodecylmerkaptan.

Tabelle

| Bei-spiel | in Toluol löslicher Anteil [%] | Viskositätszahl vom löslichen Anteil [ml/g] | in Toluol unlöslicher Anteil [%] | MVI [ml/10 min] | Ölbeständigkeit gegen Dieselkraftstoff |
|---|---|---|---|---|---|
| 1 | 64 | 107 | 36 | 3 | 0 |
| 2 | 80 | 145 | 20 | 5 | 0 |
| 3 | 75 | 140 | 25 | 6 | 0 |
| 4 | 80 | 170 | 20 | 7 | 0 |
| 5 | 30 | 105 | 70 | 20 | 0 |
| 6 (Vergleich) | 100 | 73 | 0 | 120 | 2 |

**Patentansprüche**

1. Ölbeständige expandierbare Styrolpolymerisate, enthaltend

    a) 10 bis 90 Gew.-% unvernetztes Polystyrol und/oder eines unvernetzten Styrolcopolymerisates mit mindestens 50 Gew.-% einpolymerisiertem Styrol,
    b) 10 bis 90 Gew.-% eines vernetzten Styrolpolymerisates, das mindestens 0,1 Gew.-%, jedoch weniger als 2 Gew.-%, eines Monomeren mit mindestens zwei olefinischen Doppelbindungen einpolymerisiert enthält,
    c) 1 bis 10 Gew.-%, bezogen auf die Summe von a) und b) eines $C_3$- bis $C_6$-Kohlenwasserstoffs als Treibmittel und gegebenenfalls
    d) übliche Zusatzstoffe in wirksamen Mengen,
    wobei die Mischung aus a) und b) einen Schmelzindex MFI (200 °C, 5,0 kp) nach DIN 53 735 zwischen 1 und 20 [g/10 min.] aufweist.

2. Ölbeständige expandierbare Styrolpolmerisate nach Anspruch 1, dadurch gekennzeichnet, daß die Komponente a) eine Viskositätszahl, gemessen in Toluol, zwischen 50 und 200 [ml/g] aufweist.

3. Verfahren zur Herstellung ölbeständiger expandierbarer Styrolpolymerisate, dadurch gekennzeichnet, daß man Styrol, gegebenenfalls unter Mitverwendung von bis zu 50 Gew.-%, bezogen auf das Monomerengemisch, eines weiteren Monomeren mit einer olefinischen Doppelbindung, in wäßriger Suspension in Gegenwart von 0,08 bis 0,5 Gew.-% eines Vernetzungen bewirkenden Monomeren mit mindestens zwei olefinischen Doppelbindungen und in Gegenwart von 0,01 bis 3 Gew.-% eines üblichen Reglers mit einer Kettenübertragskonstante K zwischen 0,1 und 50 polymerisiert und vor, während oder nach der Polymerisation das Treibmittel und gegebenenfalls übliche Zusatzstoffe zufügt.

4. Verfahren gemäß Anspruch 3, dadurch gekennzeichnet, daß man als Vernetzungen bewirkendes Monomeres Divinylbenzol verwendet.

5. Ölbeständige Schaumstoffe der Dichte 0,005 bis 0,1 g/cm$^3$, enthaltend

    a) 10 bis 90 Gew.-% unvernetztes Polystyrol und/oder eines unvernetzten Styrolcopolymerisats mit mindestens 50 Gew.-% einpolymerisiertem Styrol,
    b) 10 bis 90 Gew.-% eines vernetzten Styrolpolymerisats, das mindestens 0,1, jedoch weniger als 2 Gew.-% eines Monomeren mit mindestens zwei olefinischen Doppelbindungen einpolymerisiert enthält, und gegebenenfalls
    c) übliche Zusatzstoffe in wirksamen Mengen,
    wobei die Mischung aus a) und b) einen Schmelzindex MFI (200 °C, 5,0 kp) nach DIN 53 735 zwischen 1 und 20 [g/10 min] aufweist.

6. Verfahren zur Herstellung von Ölbeständigen Schaumstoffen gemäß Anspruch 5, dadurch gekennzeichnet, daß man expandierbare Styrolpolymerisate, enthaltend

    a) 10 bis 90 Gew.-% unvernetztes Polystyrol und/oder eines unvernetzten Styrolcopolymerisats mit mindestens 50 Gew.-% einpolymerisiertem Styrol,
    b) 10 bis 90 Gew.-% eines vernetzten Styrolpolymerisats, das mindestens 0,1, jedoch weniger als 2 Gew.-% eines Monomeren mit mindestens zwei olefinischen Doppelbindungen einpolymerisiert enthält,
    c) 1 bis 10 Gew.%, bezogen auf die Summe von a) und b) eines $C_3$- bis $C_6$-Kohlenwasserstoffs als Treibmittel und gegebenenfalls
    d) übliche Zusatzstoffe in wirksamen Mengen,
    wobei die Mischung aus a) und b) einen Schmelzindex MFI (200 °C, 5,0 kp) nach DIN 53 735 zwischen 1 und 20 [g/10 min] aufweist, in Partikelform in an sich bekannter Weise durch Erhitzen auf eine Temperatur oberhalb des Erweichungspunktes expandiert und die erhaltenen Schaumstoffpartikel in nicht gasdicht schließenden Formen durch Erhitzen miteinander verschweißt.